# EUROPÄISCHE PATENTANMELDUNG

(11) **EP 1 372 236 A2**
(43) Veröffentlichungstag der Anmeldung: **17.12.2003**
(21) Anmeldenummer: 03013512.3
(22) Anmeldetag: 13.06.2003
(51) Int. Cl.: H02H 3/14

(54) **Personenschutzschaltung**

(30) Priorität: 14.06.2002 DE 10226560
(71) Anmelder: Eissfeller, Enno, Dr. med., 67808 Mörsfelden (DE)
(72) Erfinder: Eissfeller, Enno, Dr. med., 67808 Mörsfelden (DE)
(74) Vertreter: Moldenhauer, Herbert

(57) **Zusammenfassung**

Die Erfindung betrifft ein Verfahren und eine Vorrichtung zum Schutz von Personen vor elektrischen Körperströmen, die den menschlichen Körper durchfließen, ausgehend von elektrischen Anlagen oder Geräten als Teil eines Verbrauchernetzes, bei welchem eine Personenschutzschaltung vorgesehen ist, die bei Auftreten eines Fehlerstroms oder einer Fehlerspannung selbsttätig eine Trennung des Verbrauchernetzes vom Versorgungsnetz herbeiführt. Erfindungsgemäß ist vorgesehen, unmittelbar nach der Trennung vom Versorgungsnetz das abgetrennte Verbrauchernetz mit der Erde kurzzuschließen. Durch diese Maßnahme wird alle Restenergie (induktive und kapazitive) in dem abgetrennten Verbrauchernetz sofort zur Erde abgeleitet und eine weitere gefährliche Belastung des Unfallopfers durch Körperströme verhindert.

## Beschreibung

### Technisches Gebiet

Die Erfindung betrifft ein Verfahren zum Schutz von Personen vor elektrischen Körperströmen, die den menschlichen Körper durchfließen, ausgehend von elektrischen Anlagen oder Geräten als Teil eines Verbrauchernetzes, bei welchem eine Personenschutzschaltung vorgesehen ist, die bei Auftreten eines Fehlerstroms oder einer Fehlerspannung selbsttätig eine Trennung des Verbrauchernetzes vom Versorgungsnetz herbeiführt. Des weiteren betrifft die Erfindung eine Vorrichtung zur Durchführung des Verfahrens.

### Stand der Technik

Für den Schutz von Personen vor Beaufschlagung mit elektrischer Energie infolge des Berührens schadhafter Isolierungen von Leitungen oder freiliegender Kontakte besteht weitverbreitet die Vorschrift, im Verbrauchernetz sogenannte Fehlerstromschutzschalter zu installieren. Zweck der Fehlerstromschutzschalter ist es, Fehlerströme zu erfassen, daraufhin selbsttätig auszulösen und so die unverzügliche (in der Regel innerhalb von 30 ms) Trennung des Verbrauchernetzes vom Versorgungsnetz herbeizuführen, um eine Personengefährdung zu beseitigen. Als Fehlerströme werden solche Ströme verstanden, die durch Erdschluss nicht über den vorgesehenen Rückleiter, sondern beispielsweise als Folge eines Unfalls oder eines Defekts in der Anlage über den Körper einer in Kontakt mit der schadhaften Stelle befindlichen Person in Form von sogenannten Körperströmen gegen Erdpotential abließen. Analoges gilt für die sogenannten Fehlerspannungen.

Nachteilig an den bekannten Verfahren zum Schutz von Personen vor elektrischen Körperströmen unter Einsatz der oben beschriebenen Personenschutzschalter ist, dass sie keinerlei Schutz vor Körperströmen durch die Entladung von Restkapazitäten im abgetrennten Verbrauchernetz bieten. Je nach angeschaltetem Verbraucher und Leitungslänge sowie auch durch andere Faktoren bedingt, können noch erhebliche ladungsbelastete Restkapazitäten seitens des jetzt vom Versorgungsnetz abgetrennten Verbrauchernetzes aktiv sein. Diese können sich dann über den noch im Erdschluss befindlichen menschlichen Körper entladen und somit eine weitere Gefährdung von Leben und Gesundheit bedingen.

### Darstellung der Erfindung

Aufgabe der Erfindung ist, ein Verfahren der eingangs beschriebenen Art so weiterzuentwickeln, dass eine Gefährdung einer unfallbedingt mit einer schadhaften Stelle im Verbrauchernetz in Kontakt befindlichen Person durch die Entladung von Restkapazitäten oder Restinduktivitäten im Verbrauchernetz nach Unterbrechung der Verbindung zum Versorgungsnetz zuverlässig verhindert wird. Eine weitere Aufgabe der Erfindung besteht darin, eine Vorrichtung zur Durchführung des Verfahrens bereitzustellen.

Diese Aufgabe wird gelöst mit einem Verfahren mit allen Merkmalen des Patentanspruchs 1 sowie mit einer Vorrichtung mit allen Merkmalen des Patentanspruchs 7. Vorteilhafte Ausgestaltungen der Erfindung sind in den Unteransprüchen beschrieben.

Erfindungsgemäß ist bei einem Verfahren zum Schutz von Personen vor elektrischen Körperströmen, die den menschlichen Körper durchfließen ausgehend von elektrischen Anlagen oder Geräten als Teil eines Verbrauchernetzes, bei welchem eine Personenschutzschaltung vorgesehen ist, die bei Auftreten eines Fehlerstroms oder einer Fehlerspannung selbsttätig eine Trennung des Verbrauchernetzes vom Versorgungsnetz herbeiführt, vorgesehen, das Verbrauchernetz unmittelbar nach der Trennung vom Versorgungsnetz mit der Erde kurzzuschließen, vorzugsweise über eine niederohmige, hochbelastbare, elektrisch leitende Verbindung. Durch diese Maßnahme wird alle Restenergie (induktive und kapazitive) in dem abgetrennten Verbrauchernetz sofort zur Erde abgeleitet und eine weitere gefährliche Belastung des Unfallopfers durch Körperströme verhindert.

Besonders einfach lässt sich eine entsprechende Schaltung realisieren, wenn der Kurzschluss zur Erde über den geerdeten Schutzleiter erfolgt.

In der Regel erfolgt dieser Kurzschluss am Netzeingang des abgetrennten Verbrauchernetzes.

In einer weiteren bevorzugten Ausführungsform der Erfindung ist vorgesehen, dass bei großen Schaltanlagen zusätzlich zur Kurzschlussverbindung am Netzeingang des Verbrauchernetzes zeitgleich weitere Kurzschlussverbindungen an weit vom Netzeingang entfernten Orten und/oder im Bereich leistungsintensiver Verbraucher mit hohen Kapazitäten und/oder hohen Induktivitäten und/oder hohen mechanischen Restenergien (z. B. Schwungmasse laufender Motoren) im Verbrauchernetz geschaltet werden. Dadurch wir der Personenschutz durch weitere Verminderung der das Unfallopfer belastenden Restenergie noch weiter erhöht. Die Schaltung dieser Kurzschlussverbindungen kann über von der Personenschutzschaltung ferngeschaltete Potentialausgleichsschalter, wie zum Beispiel Relais-Schalter, erfolgen.

Vorzugsweise wird als weitere Sicherheitsmaßnahme unmittelbar nach der Trennung vom Versorgungsnetz im abgetrennten Teil des Verbrauchernetzes noch eine niederohmige, hochbelastbare, elektrisch leitende Verbindung zum Null-Leiter des Netzes hergestellt. Durch diese Maßnahme wird der Stillstand von Maschinen, die Kraftentlastung bei Magneten und eine Löschung noch vorhandener elektrostatischer Felder noch stärker beschleunigt.

Zweckmäßigerweise wird die Kurzschlussschaltung zur Erde bzw. zum Null-Leiter durch ein von dem Personenschutzschalter unmittelbar nach erfolgter Trennung vom Versorgungsnetz abgegebenes Signal ausgelöst.

### Kurzbeschreibung der Zeichnungen

Es zeigen:
- Figur 1: in schematischer Darstellung eine Personenschutzschaltung nach dem Stand der Technik;
- Figur 2: in schematischer Darstellung eine bevorzugte Ausführungsform einer erfindungsgemäßen Personenschutzschaltung.

### Ausführung der Erfindung

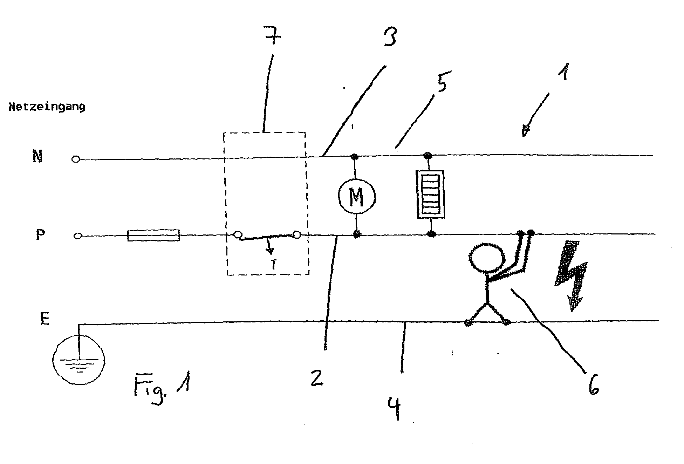

In Fig. 1 ist in schematischer Darstellung die prinzipielle Funktionsweise einer Personenschutzschaltung nach dem Stand der Technik dargestellt. In der Figur ist ein Teil eines Verbrauchernetzes 1 mit einem Phasenleiter 2, einem Null-Leiter 3 und einem geerdeten Schutzleiter 4 zu sehen. Zwischen dem Phasenleiter 2 und dem Null-Leiter 3 sind verschiedene Verbraucher 5 angeordnet. Kommt eine Person 6 in Kontakt mit dem Phasenleiter 2, so tritt ein Fehlerstrom in Form von über den menschlichen Körper 6 abfließende Körperströme auf. Dieser Fehlerstrom löst den Personenschutzschalter 7 aus, der eine Abtrennung des Phasenleiters 2 vom Versorgungsnetz herbeiführt. Im abgetrennten Verbrauchernetz 1 noch vorhandene, erheblich ladungsbelastete Restkapazitäten können sich bei dieser Schaltung noch weiterhin über den im Erdschluss befindlichen menschlichen Körper 6 entladen und bedingen somit eine weitere Gefährdung von Leben und Gesundheit des Unfallopfers 6.

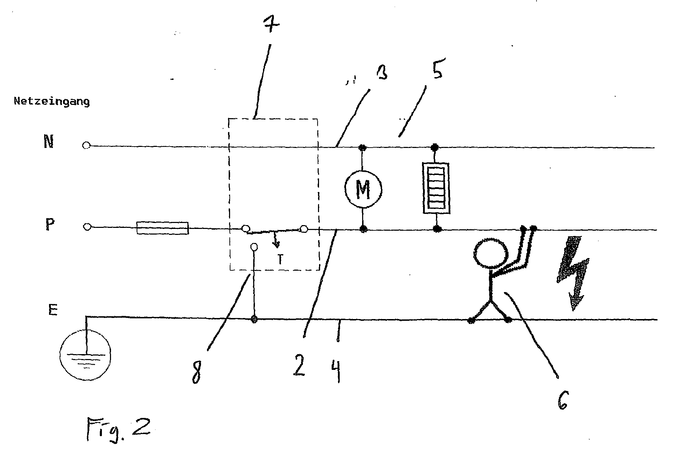

Fig. 2 zeigt am Beispiel einer bevorzugten Ausführungsform der Erfindung die prinzipielle Funktionsweise der vorliegenden Erfindung. Gleiche Teile sind mit gleichen Bezugszeichen versehen. Im Unterschied zu der bekannten Schaltung in Figur 1 löst der Personenschutzschalter 7 nicht nur eine Trennung des Phasenleiters 2 vom Versorgungsnetz 1 aus, wenn eine Person 6 in Kontakt mit dem Phasenleiter 2 der Schaltung gerät und Fehlerströme in Form von gefährlichen Körperströmen abfließen. Gleichzeitig bewirkt der Personenschutzschalter noch die Herstellung einer Kurzschlussverbindung 8 des abgetrennten Verbrauchernetzes zur Erde. Im Verbrauchernetz noch vorhandene Restkapazitäten können sich über diese niederohmige, hochbelastbare Kurzschlussverbindung am menschlichen Körper vorbei schnell und sicher entladen. Die Gefährdung des Unfallopfers wird erheblich herabgesetzt.

## Patentansprüche

1. Verfahren zum Schutz von Personen vor elektrischen Körperströmen, die den menschlichen Körper durchfließen, ausgehend von elektrischen Anlagen oder Geräten als Teil eines Verbrauchernetzes, bei welchem eine Personenschutzschaltung vorgesehen ist, die bei Auftreten eines Fehlerstroms oder einer Fehlerspannung selbsttätig eine Trennung des Verbrauchernetzes vom Versorgungsnetz herbeiführt, **dadurch gekennzeichnet, dass** unmittelbar nach der Trennung vom Versorgungsnetz das abgetrennte Verbrauchernetz mit der Erde kurzgeschlossen wird.

2. Verfahren nach Anspruch 1, **dadurch gekennzeichnet, dass** die Kurzschlussverbindung über den geerdeten Schutzleiter erfolgt.

3. Verfahren nach Anspruch 1 oder 2, **dadurch gekennzeichnet, dass** bei großen Schaltanlagen zusätzlich zur Kurzschlussverbindung am Netzeingang des abgetrennten Verbrauchernetzes zeitgleich weitere Kurzschlussverbindungen zur Erde an weit vom Netzeingang entfernten Orten und/oder im Bereich leistungsintensiver Verbraucher mit hohen Kapazitäten und/oder hohen Induktivitäten und/oder hohen mechanischen Restenergien hergestellt werden.

4. Verfahren nach Anspruch 3, dass die Schaltung der zusätzlichen Erdverbindungen mittels schnellschaltender Relaisschalter erfolgt.

5. Verfahren nach einem der Ansprüche 1 bis 4, **dadurch gekennzeichnet, dass** im abgetrennten Verbrauchernetz zusätzlich zur Herstellung der Kurzschlussverbindungen zur Erde zeitgleich eine weitere Kurzschlussverbindung zum Null-Leiter geschaltet wird.

6. Verfahren nach einem der Ansprüche 1 bis 5, **dadurch gekennzeichnet, dass** die Kurzschlussschaltungen zur Erde und/oder zum Null-Leiter durch ein von der Personenschutzschaltung unmittelbar nach erfolgter Abtrennung vom Versorgungsnetz abgegebenes Signal ausgelöst werden.

7. Vorrichtung zur Durchführung des Verfahrens nach einem der Ansprüche 1 bis 6, **gekennzeichnet durch** einen Personenschutzschalter (7), welcher bei Auftreten eines Fehlerstroms oder einer Fehlerspannung unverzüglich das Verbrauchernetz (1) vom Versorgungsnetz trennt, und mindestens eine weitere Schalteinrichtung mittels derer unmittelbar nach der Trennung vom Versorgungsnetz eine Kurzschlussverbindung zwischen dem Verbrauchernetz (1) und der Erde herstellbar ist.

8. Vorrichtung nach Anspruch 7, **dadurch gekennzeichnet, dass** mittels der Schalteinrichtung das abgetrennte Verbrauchernetz (1) mit dem geerdeten Schutzleiter kurzschließbar ist.

9. Vorrichtung nach Anspruch 7 oder 8, **dadurch gekennzeichnet, dass** das Verbrauchernetz (1) am Netzeingang kurzschließbar ist.

10. Vorrichtung nach einem der Ansprüche 7 bis 9, **dadurch gekennzeichnet, dass** bei großen Schaltanlagen zusätzlich zur Kurzschlussverbindung am Netzeingang (8) zeitgleich weitere Kurzschlussverbindungen zum Erdpotential an weit vom Netzeingang entfernten Orten und/oder im Bereich leistungsintensiver Verbraucher (5) mit hohen Kapazitäten und/oder hohen Induktivitäten und/oder hohen mechanischen Restenergien vorgesehen sind.

11. Vorrichtung nach Anspruch 10, **dadurch gekennzeichnet, dass** schnellschaltende Relaisschalter zur Herstellung der zusätzlichen Erdverbindungen vorgesehen sind.

12. Vorrichtung nach einem der Ansprüche 7 bis 11, **dadurch gekennzeichnet, dass** zusätzlich zur Herstellung der Kurzschlussverbindungen zur Erde zeitgleich eine weitere niederohmige hochbelastbare Kurzschlussverbindung zum Null-Leiter (3) schaltbar ist.

13. Vorrichtung nach einem der Ansprüche 7 bis 12, **dadurch gekennzeichnet, dass** die Kurzschlussschaltungen zur Erde (8) und/oder zum Null-Leiter (3) durch ein von der Personenschutzschaltung (7) unmittelbar nach erfolgter Abtrennung vom Versorgungsnetz abgegebenes Signal auslösbar ist.
